# EUROPÄISCHE PATENTSCHRIFT

(11) **EP 0 439 068 B1**
(45) Veröffentlichungstag und Bekanntmachung des Hinweises auf die Patenterteilung: **16.03.1994**
(21) Anmeldenummer: 91100564.3
(22) Anmeldetag: 18.01.1991
(51) Int. Cl.: A01B 73/04, A01D 78/10

(54) **Landwirtschaftliche Arbeitsmaschine**
Agricultural machine
Machine agricole

(30) Priorität: 22.01.1990 DE 4001709
(43) Veröffentlichungstag der Anmeldung: 31.07.1991
(73) Patentinhaber: Fella-Werke GmbH, D-90537 Feucht (DE)
(72) Erfinder: Pürrer, Josef, W-8501 Feucht (DE); Kohl, Bernhard, W-8501 Winkelhaid (DE)
(74) Vertreter: Matschkur, Götz, Lindner Patent- und Rechtsanwälte

(56) Entgegenhaltungen:
- EP-A- 0 300 937
- EP-A- 0 316 560
- DE-A- 3 628 605
- FR-A- 2 446 586
- FR-A- 2 590 107

## Beschreibung

Die Erfindung richtet sich auf eine landwirtschaftliche Arbeitsmaschine mit mehreren quer zur Fahrtrichtung nebeneinander angeordneten Rahmenteilen, deren äußere Rahmenteile beim Übergang aus der Arbeitsstellung in die Transportstellung gegenüber dem mittleren Rahmenteil durch einen Stellmechanismus hochklappbar sind.

Diese Bauart - man vgl. beispielsweise EP-A-0316560 - findet sich bei verschiedenen Bodenbearbeitungsmaschinen, vorzugsweise aber bei Heuwerbungsmaschinen, die beispielsweise mit mehreren Arbeitskreiseln versehen sind und eine Arbeitsbreite in der Größenordnung von etwa 7 m erreichen können. Nach den Vorschriften der StVZO darf die Maschinenbreite für den Straßentransport aber nur 2,5 bzw. 3 m betragen. Deshalb ist der Maschinenrahmen mehrteilig ausgebildet. Er besteht aus einem an den Schlepper angebauten Rahmenmittelteil mit im allgemeinen zwei Arbeitskreiseln und beidseitig angebauten einem oder mehreren äußeren Rahmenteilen, die vorzugsweise je einen weiteren Arbeitskreisel tragen. Die Rahmenteile sind durch Schwenkachsen aneinander angelenkt. Die Schwenkachsen können annähernd lotrecht angebracht sein, wenn die äußeren Rahmenteile beim Übergang in die Transportstellung zur Maschinenrückseite hin verschwenkt werden. Eine wesentlich günstigere Schwerpunktlage der Maschine in ihrer Transportstellung ergibt sich jedoch dann, wenn die Schwenkachsen zwischen den Rahmenteilen parallel zur Fahrtrichtung verlaufen. Die äußeren Rahmenteile lassen sich dann um einen Winkel von bis etwa 90° zum Rahmenmittelteil hochschwenken. Die Schwenkbewegung wird im allgemeinen mittels hydraulischer Stelltriebe bewirkt, die an die vorhandene Schlepperhydraulik angeschlossen sind und durch die Bedienungsperson vom Schleppersitz aus betätigt werden. In der Praxis ist für jede Rahmenseite ein Zugzylinder vorgesehen. Es sind allerdings auch Ausführungsformen bekannt, die sich eines gemeinsamen Zugzylinders zwischen den beidseitigen äußeren Rahmenteilen bedienen. Diese Konstruktion ist jedoch mit erheblichen baulichen und funktionellen Problemen behaftet. Zum einen sind die hierzu erforderlichen Zugzylinder vergleichsweise teuer, und bei der bei solchen Maschinen unvermeidbaren längeren Standzeit sind sie besonders rostgefährdet. Die Dichtungen solcher Zugzylinder sind empfindlich und führen insbesondere bei den vergleichsweise rauhen Betriebsbedingungen leicht zu Undichtigkeiten.

Eine synchrone Schwenkbewegung zu beiden Seiten des mittleren Rahmenteils ist mit diesen Geräten praktisch nicht zu erreichen. So führen schon geringe Gewichtsunterschiede der beiderseitigen äußeren Rahmenteile, die ggf. allein durch Verschmutzungen bedingt sein können, zu erheblichen Unterschieden der beiderseitigen Schwenkbewegungen. Noch gravierender erweisen sich diese Probleme beim Einsatz derartiger Arbeitsmaschinen in Hanglagen. Wird jedes äußere Rahmenteil unabhängig von der anderen Seite betätigt, wird die Bewegungsführung beim Ausschwenken des hangabwärts liegenden äußeren Rahmenteils durch die hierdurch bedingte günstige Schwerpunktlage vorteilhaft beeinflußt. Demgegenüber liegt der Schwerpunkt der hangaufwärts arbeitenden Rahmenteile so ungünstig, daß vielfach ein Ausschwenken nicht ohne besondere zusätzliche Hilfen erfolgen kann. Diese Mängel sind auch nicht durch Federn auszugleichen, die in den Endlagen der Schwenkbewegungen der äußeren Rahmenteile als Anschlag dienen und beim Hochschwenken dieser Rahmenteile vorgespannt werden. Wenn in allen diesen Fällen die Schwenkbewegung sowohl beim Einschwenken wie beim Ausschwenken nicht einwandfrei funktioniert, muß der Schlepperfahrer absteigen und von Hand nachhelfen, was - verständlicherweise - unbequem, aber auch höchst gefährlich ist. Eine konstruktive Abhilfe wäre nur durch einen doppelt wirkenden Stelltrieb möglich, der entsprechend aufwendig ist.

Eine landwirtschaftliche Arbeitsmaschine mit synchron hochschwenkbaren Rahmenteilen ist bereits aus der FR-A-2446586 bekanntgeworden. Dabei handelt es sich allerdings um eine Maschine ohne mittleres Rahmenteil, an welchem die beiden äußeren hochschwenkbaren Rahmenteile angelenkt sind, so daß sich die in der französischen Patentanmeldung vorgeschlagene Konstruktion nicht ohne weiteres auf landwirtschaftliche Arbeitsmaschinen mit einem mittleren Rahmenteil und daran angelenkten äußeren Rahmenteilen übertragen lassen.

Schließlich ist aus der EP-A-0300937 eine landwirtschaftliche Arbeitsmaschine bekannt mit einem Koppelglied, das mit einer Abschaltkupplung verbunden ist, so daß beim Hochschwenken der Rahmenseitenteile der Antrieb zu den Arbeitselementen abgeschaltet ist, um die Unfallgefahr zu verringern.

Der Erfindung liegt die Aufgabe zugrunde, eine einfache konstruktive Lösung zu suchen, um das Aus- und Einschwenken der äußeren Rahmenteile einer landwirtschaftlichen Arbeitsmaschine der eingangs bezeichneten Art sicher und zuverlässig auch unter erschwerten Einsatzbedingungen zu ermöglichen.

Zur Lösung dieser Aufgabe ist erfindungsgemäß vorgesehen, daß die Schwenkmechanismen der beiderseitigen äußeren Rahmenteile mit einem am mittleren Rahmenteil gelagerten Koppelglied verbunden sind, an dem ein mit seinem anderen Ende an diesem mittleren Rahmenteil angelenkter, aus einem einfach wirkenden Druckmittelzylinder bestehender Stelltrieb angreift, derart, daß die Schwenkbewegung der äußeren Rahmenteile gleichzeitig und synchron erfolgt, und daß das Koppelglied mit einer Abschaltkupplung innerhalb der im mittleren Rahmenteil gelagerten Antriebsverbindung (Getriebe 12) zu den Arbeitselementen der äußeren Rahmenteile verbunden ist.

Die mechanische Verbindung der vorhandenen Schwenkmechanismen gewährleistet ein sicheres Absenken der äußeren Rahmenteile auch bei der Arbeit in schwierigem Gelände, vor allem in Hanglagen, so daß die beiderseitigen äußeren Rahmenteile zuverlässig verschwenkt werden können. Das ebenso lästige wie gefährliche Nachhelfen von Hand wird damit völlig entbehrlich. Durch die Ausbildung des Stelltriebs als einfach wirkender Druckmittelzylinder ergibt sich eine konstruktiv sehr einfache Lösung, wobei in Verbindung mit der Abschaltkupplung eine erhöhte Sicherung gegen Unfälle gewährleistet ist. Die Antriebsverbindung überträgt nämlich den im allgemeinen vom Schlepper abgeleiteten Antrieb auf die Arbeitselemente der äußeren Rahmenteile. Kann dieser Antrieb in unmittelbarer Verbindung mit dem Verschwenken der äußeren Rahmenteile stillgesetzt werden, können die Arbeitselemente nach Einleitung des Schwenkvorgangs der Rahmenteile nicht mehr weiterarbeiten. Zum anderen können durch diese Abschaltkupplung die zwischen den Rahmenteilen vorgesehenen Gelenke einfach ausgeführt werden, denn eine Antriebsübertragung bei hochgeschwenktem äußeren Rahmenteil ist unmöglich.

Schließlich hat es sich als besonders vorteilhaft erwiesen, ein Koppelglied aus einem doppelarmigen Schwenkhebel zu verwenden, an dessen beiden Armen je ein Schwenkmechanismus angreift.

Weitere Merkmale, Einzelheiten und Vorteile der Erfindung ergeben sich aus der folgenden Beschreibung einiger bevorzugter Ausführungsformen der Erfindung sowie anhand der Zeichnung. Hierbei zeigen:

Schließlich hat es sich als besonders vorteilhaft erwiesen, ein Koppelglied aus einem doppelarmigen Schwenkhebel zu verwenden, an dessen beiden Armen je ein Schwenkmechanismus angreift.

Weitere Merkmale, Einzelheiten und Vorteile der Erfindung ergeben sich aus der folgenden Beschreibung einiger bevorzugter Ausführungsformen der Erfindung sowie anhand der Zeichnung. Hierbei zeigen:
Fig. 1 eine einfache Draufsicht auf die an einen Schlepper angebaute Arbeitsmaschine;
Fig. 2 eine Rückansicht der Maschine in ihrer Transportstellung;
Fig. 3 eine abgebrochene vergrößerte Rückansicht der Arbeitsmaschine in Arbeitsstellung;
Fig. 4 eine Detail aus Fig. 3 in Transportstellung;
Fig. 5 eine Draufsicht auf die Maschine mit den Verstellmechanismen und
Fig. 6 ein Detail einer abgewandelten Ausführungsform.

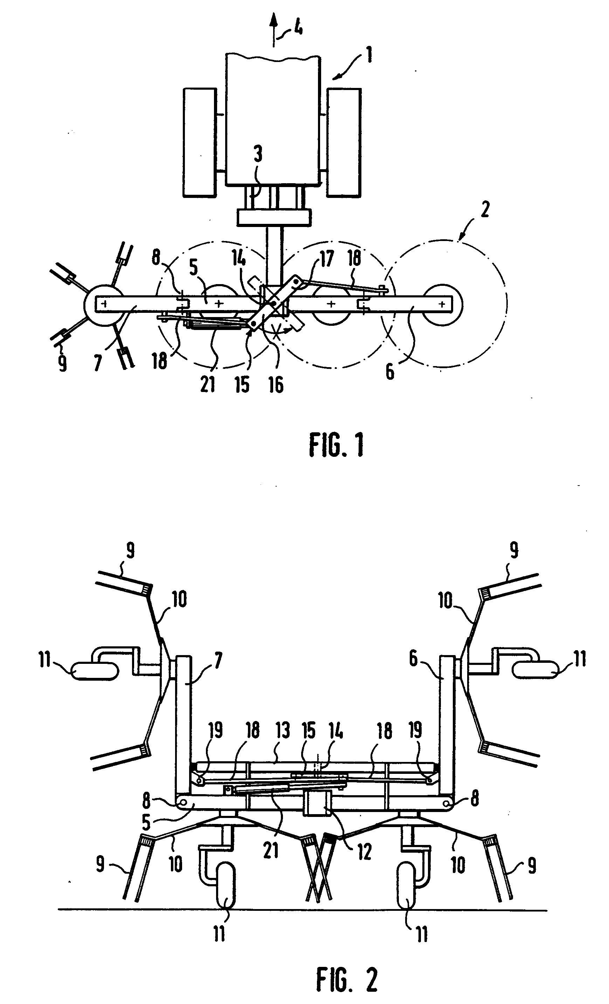

An den Schlepper 1 ist eine landwirtschaftliche Arbeitsmaschine, hier eine Heuwerbungsmaschine 2 in üblicher Weise mittels einer Dreipunkthydraulik 3 angebaut. Die Arbeitsmaschine besteht aus drei quer zur Fahrtrichtung 4 aneinander angebauten Rahmenteilen, nämlich dem mittleren Rahmenteil 5 und den beiden äußeren Rahmenteilen 6 und 7. Aus Gründen der Vereinfachung sind hier lediglich zwei äußere Rahmenteile wiedergegeben. In der in Fig. 1 wiedergegebenen Arbeitsstellung weist die Maschine 2 eine beachtlich große Arbeitsbreite auf. Für den Straßentransport werden die beiden äußeren Rahmenteile 6, 7 um die etwa entsprechend der Fahrtrichtung 4 verlaufenden Schwenkachsen 8 hochgeklappt, wie dies die Fig. 2 erkennen läßt. An dem mittleren Rahmenteil 5 sind bei der in der Zeichnung wiedergegebenen Ausführungsform die beiden mit Federzinken 9 besetzten Arbeitskreisel 10 angebracht. Jeder ist mit einem Stützrad 11 versehen. Die beiden äußeren Rahmenteile 6, 7 tragen je einen Arbeitskreisel 10 und wiederum ein Stützrad 11. Der Antrieb der Arbeitskreisel 10 erfolgt vom Schlepper her über ein Getriebe 12 und in den Rahmenteilen 5 bzw. 6 u. 7 verlaufende Antriebswellen. Diese sind, da an sich bekannt, im einzelnen nicht dargestellt. Im Bereich der Schwenkachsen 8 erfolgt die Antriebsübertragung zwischen den Rahmenteilen 5, 6 u. 7 durch Kreuzgelenke.

Über dem mittleren Rahmenteil 5 ist ein Träger 13 angeordnet, und an diesem ist über den Zapfen 14 ein doppelarmiger Hebel 15 schwenkbar gelagert. An jedem der beiden Hebelarme 16 u. 17 greift ein Gestängeteil 18 an, dessen anderes Ende an einer auf dem jeweiligen äußeren Rahmenteil 6 bzw. 7 befestigten Lasche 19 angelenkt ist. An dem einen Hebelarm 16 des Doppelhebels 15 greift außerdem die Kolbenstange 20 eines hydraulischen Stelltriebs 21 an, der in im einzelnen nicht wiedergegebener Weise an die Schlepperhydraulik angeschlossen ist.

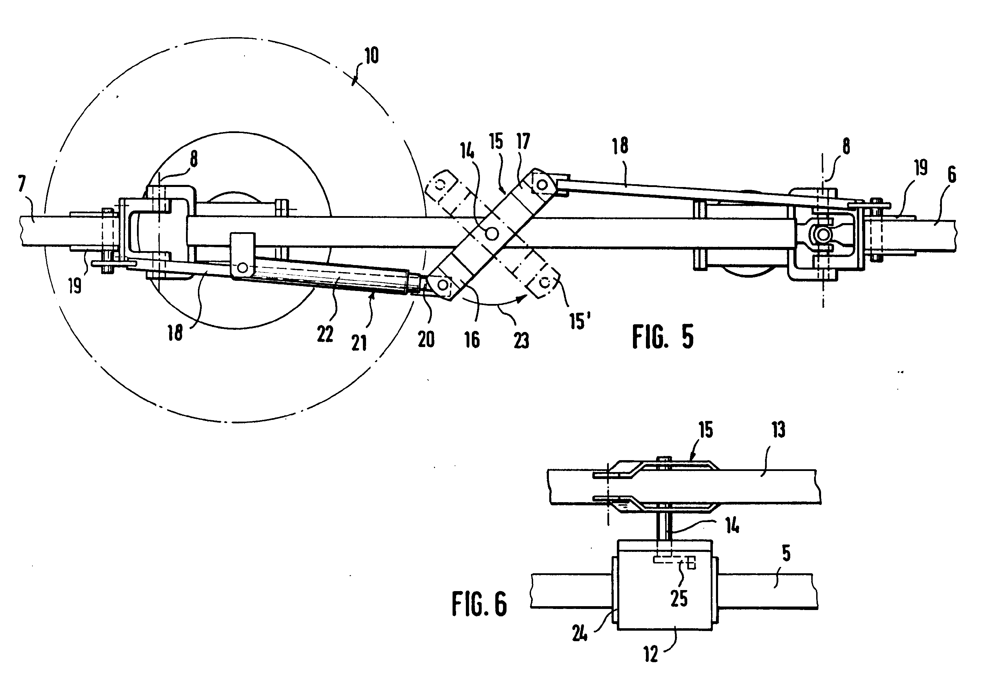

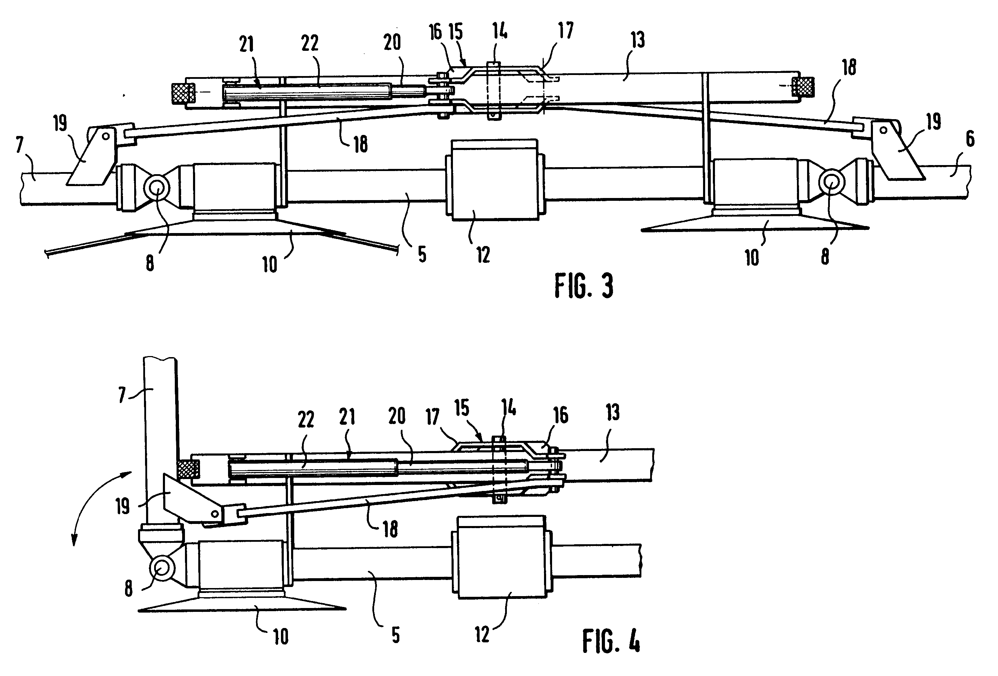

Wird in der in den Fig. 1, 3 u. 5 der Zylinder 22 dieses Stelltriebs 21 von dem Druckmittel beaufschlagt, wird die Kolbenstange 20 aus dem Zylinder 22 ausgefahren und der Doppelhebel 15 in Pfeilrichtung 23 um den Zapfen 14 verschwenkt. Durch die beiden Zuggestänge 18 und die an den äußeren Rahmenteilen 6 bzw. 7 befestigten Laschen 19 wird die Bewegung auf die äußeren Rahmenteile 6, 7 übertragen, und diese werden unter Verschwenkung um die Achsen 8 in die Aushebe- oder Transportstellung nach den Fig. 2 u. 4 überführt. Die Endstellung des Doppelhebels 15 ist strichpunktiert bei 15' in Fig. 5 wiedergegeben. Wird der Stelltrieb 21 auf Entleeren geschaltet, schwenken die äußeren Rahmenteile 6, 7 aus ihrer Transportstellung (s. Fig. 2) infolge ihres Eigengewichts nach unten in die Arbeitsstellung (s. Fig. 1). Ist beispielsweise bei Einsatz der Arbeitsmaschine in einer Hanglage das eine äußere Rahmenteil 6 bzw. 7 höher plaziert und kann es durch die dadurch hervorgerufene ungünstige Lage seines Schwerpunkts nicht selbsttätig nach unten verschwenken, wird dennoch diese Absenkbewegung ausgelöst durch die mechanische Verbindung mit dem anderen Rahmenteil 6 bzw. 7 durch die Zugstangen 18 und den Doppelhebel 15.

Bei der Ausführungsform nach Fig. 6 ist der den Doppelhebel 15 lagernde Zapfen 14 nach unten verlängert bis in das Gehäuse 24 des Getriebes 12, und er trägt an seinem in dem Getriebegehäuse 24 angeordneten Ende einen Arm 25, der eine nicht dargestellte, in das Getriebe 12 integrierte Ab schaltkupplung betätigt. Hierbei kann es sich um eine Klauenkupplung oder Reibungskupplung handeln, deren Ausrücken bewirkt, daß kein Antrieb auf die äußeren Rahmenteile 6, 7 übertragen wird. Auf diese Weise können die Antriebs-Kreuzgelenke zwischen den Rahmenteilen 5 bzw. 6 u. 7 als einfache Kreuzgelenke ausgeführt werden, um eine Beschädigung durch unbeabsichtigtes Einschalten des Antriebs bei hochgeschwenkten äußeren Rahmenteilen 6, 7 zu verhindern. Außerdem wird auf diese Weise die Unfallgefahr beträchtlich gemindert.

## Patentansprüche

1. Landwirtschaftliche Arbeitsmaschine mit mehreren quer zur Fahrtrichtung nebeneinander angeordneter Rahmenteile, deren äußere Rahmenteile beim Übergang aus der Arbeitsstellung in die Transportstellung gegenüber dem mittleren Rahmenteil durch einen Schwenkmechanismus hochklappbar sind, dadurch gekennzeichnet, daß die Schwenkmechanismen der beiderseitigen äußeren Rahmenteile (6, 7) mit einem am mittleren Rahmenteil (5) gelagerten Koppelglied verbunden sind, an dem ein mit seinem anderen Ende an diesem mittleren Rahmenteil (5) angelenkter, aus einem einfach wirkenden Druckmittelzylinder (18) bestehender Stelltrieb (21) angreift, derart, daß die Schwenkbewegung der äußeren Rahmenteile (6, 7) gleichzeitig und synchron erfolgt, und daß das Koppelglied mit einer Abschaltkupplung innerhalb der im mittleren Rahmenteil (5) gelagerten Antriebsverbindung (Getriebe 12) zu den Arbeitselementen der äußeren Rahmenteile (6, 7) verbunden ist.

2. Landwirtschaftliche Arbeitsmaschine nach Anspruch 1, dadurch gekennzeichnet, daß das Koppelglied aus einem doppelarmigen Schwenkhebel (15) besteht, an dessen beiden Armen (16, 17) je ein Schwenkmechanismus der äußeren Rahmenteile (6, 7) angreift.

## Claims

1. Agricultural machine having a plurality of frame parts arranged next to one another transverse to the direction of travel, the outer frame parts being capable of pivoting upwards relative to the central frame part by means of a swivel mechanism in order to switch from the working position into the transporting position, characterised in that the swivel mechanisms of the two outer frame parts (6, 7) disposed on each side are connected to a coupling member, which is mounted on the central frame part (5) and on which an actuator (21) - consisting of a singly operating pressure medium cylinder (18) coupled by its other end to said central frame part (5) - acts in such a manner that pivoting of the outer frame parts (6, 7) takes placed simultaneously and synchronously, and in that the coupling member is connected to the working elements of the outer frame parts (6, 7) by a disconnecting coupler inside the drive connexion (transmission 12) mounted in the central frame part (5).

2. Agricultural machine according to claim 1, characterised in that the coupling member consists of a double-armed swivel lever (15), on both arms (16, 17) of which a respective swivel mechanism of the outer frame parts (6, 7) acts.

## Revendications

1. Machine agricole comportant plusieurs éléments de cadre disposés côte-à-côte transversalement par rapport à la direction de déplacement et dont les éléments de cadre extérieurs peuvent être relevés, au moyen d'un mécanisme de basculement, par rapport à l'élément de cadre médian, lors du passage de la position de travail à la position de transport, caractérisée en ce que les mécanismes de basculement des éléments de cadre extérieurs (6,7) situés des deux côtés sont reliés à un organe d'accouplement, qui est monté sur l'élément de cadre médian (5) et auquel est accroché un organe de réglage (21) articulé par son autre extrémité sur cet élément de cadre médian (5) et constitué par un vérin à simple effet (18), de telle sorte que le mouvement de basculement des éléments de cadre extérieurs (6,7) s'effectue d'une manière simultanée et synchrone, et en ce que l'organe d'accouplement est relié, par un accouplement débrayable à l'intérieur du système de liaison d'entraînement ( transmission 12), monté dans l'élément de cadre médian (5), aux éléments de travail des éléments de cadre extérieur (6,7).

2. Machine agricole selon la revendication 1, caractérisée en ce que l'organe d'accouplement est constitué par un levier pivotant (15) à deux bras, dont les deux bras (16, 17) sont attaqués par des mécanismes de basculement respectifs des éléments de cadre extérieur (6,7).
